Europäisches Patentamt

European Patent Office

Office européen des brevets

(19)

(11) Veröffentlichungsnummer: **0 074 347**
**B1**

(12) **EUROPÄISCHE PATENTSCHRIFT**

(45) Veröffentlichungstag der Patentschrift:
20.04.88

(51) Int. Cl.⁴: **B 23 P 15/00**

(21) Anmeldenummer: **82890124.9**

(22) Anmeldetag: **01.09.82**

(54) Verfahren zur Herstellung von Förderschnecken.

(30) Priorität: **04.09.81 AT 3832/81**

(43) Veröffentlichungstag der Anmeldung:
**16.03.83 Patentblatt 83/11**

(45) Bekanntmachung des Hinweises auf die Patenterteilung:
**20.04.88 Patentblatt 88/16**

(84) Benannte Vertragsstaaten:
**BE CH DE FR GB IT LI LU NL SE**

(56) Entgegenhaltungen:
**EP - A - 0 022 605**
**EP - A - 0 052 092**
**FR - A - 2 359 655**
**GB - A - 1 580 085**

(73) Patentinhaber: **VEREINIGTE EDELSTAHLWERKE AKTIENGESELLSCHAFT (VEW), Elisabethstrasse 12, A-1010 Wien (AT)**

(72) Erfinder: **Kohnhauser, Alexander, Stubenberggasse 14, A-8605 Kapfenberg (AT)**

(74) Vertreter: **Widtmann, Georg, Dr., Vereinigte Edelstahlwerke Aktiengesellschaft (VEW) Elisabethstrasse 12, A-1010 Wien (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Förderschnecken, insbesondere solchen für Kunststoffverarbeitungsmaschinen, mit einem zähfesten Stahlkern und einer hochverschleissfesten Plattierung.

Die hohen Beanspruchungen und der damit zusammenhängende starke Verschleiss, dem insbesondere die Stege von Förderschnecken unterworfen sind, hat schon Veranlassung gegeben, nach Lösungen für Standzeitverbesserungen zu suchen. So ist es beispielsweise bekannt, die Oberflächenbereiche von in der Kunststoffverarbeitung eingesetzten Förderschnecken nach den Methoden der Einsatzhärtung, des Nitrierens, des Ionitrierens, usw. einer Härtung zu unterziehen und vor allem die Stege und gegebenenfalls auch die Schneckenspitzen durch Aufbringung besonders verschleissfester Schweissauftragungen zu panzern. Es konnte damit zwar eine bedeutende Verbesserung erzielt werden, doch war dies mit einem relativ hohen Arbeitsaufwand und einer dementsprechenden Verteuerung verbunden.

Nach der Parallelanmeldung EP-A1-052 092, die gemäss Artikel 54(3) EPÜ zum Stand der Technik gehört, ist ein Verfahren beschrieben, das die Herstellung eines Hohlzylinders angibt. Dieser Hohlzylinder ist für eine Innendruckbeanspruchung ausgelegt. Dazu wird ein härtbarer Stahlkern und eine Hülle aus Baustahl verwendet und anschliessend geschmiedet. Für die Verschweissung ist jedoch eine Querschnittsverminderung des Kernwerkstoffes um 20% erforderlich. Dieser so erhaltene Vollrohling wird mechanisch zu einem Hohlzylinder ausgebohrt. Anschliessend gehärtet und fertigbearbeitet, wobei die Härtung nur auf die Verschleissschicht abgestimmt ist. Ferner ist noch die EP-A1-022 605 und die FR-A 2 359 655 zu erwähnen, da in ersterer Druckschrift ein Plattierungsverfahren durch Warmwalzen an Halbzeugen geoffenbart ist. Ein Herstellverfahren für Förderschnecken oder derlei komplizierte Maschinenteile ist jedoch nicht aufgezeigt. Desgleichen gilt auch für die französische Druckschrift, da auch hier nur die Herstellung von Maschinenhohlzylindern angesprochen ist.

Die Aufgabe der vorliegenden Erfindung besteht darin, ein wesentlich einfacheres Herstellungsverfahren für Förderschnecken insbesondere für Kunststoffverarbeitungsmaschinen anzugeben. Erfindungsgemäss wird das Ziel dadurch erreicht, dass zunächst ein Verbundmetallrohling durch Schmieden oder Warmwalzen eines mit einer satt anliegenden Hülle aus dem Plattierungswerkstoff versehenen stabförmigen Stahlkerns unter Ausbildung einer metallischen Bindung zwischen Kern und Hülle unter Verminderung des Hüllendurchmessers um zumindest 20% hergestellt und nach Weichglühen des Rohlings das Schneckenprofil herausgeformt wird und dass sodann eine aus Härten und Anlassen bestehende Wärmebehandlung zur Härteeinstellung des Plattierungswerkstoffes sowie des Kernwerkstoffes vorgenommen und schliesslich die Fertigbearbeitung auf das Endmass durchgeführt wird.

Gemäss einer Ausführungsform dieses Verfahrens wird als Plattierungswerkstoff ein Werkzeugstahl mit 0,6–2,2 Gew.% C, 0,1–1,5 Gew.% Si, 0,1–1,5 Gew.% Mn, 4,8–13 Gew.% Cr, 0–1,5 Gew.% Mo, 0–1,5 Gew.% V, 0–1,5 Gew.% W, Rest Eisen und unvermeidliche Verunreinigungen verwendet.

Sehr vorteilhaft können aber als Plattierungswerkstoffe auch ein Chromstahl mit 0,40–1,10 Gew.% C, 0,1–0,6 Gew.% Si, 0,1–0,6 Gew.% Mn, 12–18 Gew.% Cr, 0,1–1,5 Gew.% Mo, 0,1–1,6 Gew.% V, 0,1–1,6 Gew.% Co, Rest Eisen und unvermeidliche Verunreinigungen oder ein Schnellarbeitsstahl mit 0,6–1,5 Gew.% C, 0,1–1,5 Gew.% Si, 0,1–0,8 Gew.% Mn, 0,8–4,8 Gew.% Cr, 1,5–10 Gew.% Mo, 1,5–4,5 Gew.% V, 1,5–18 Gew.% W, 1,5–10 Gew.% Co, Rest Eisen und unvermeidliche Verunreinigungen verwendet werden.

Als Kernwerkstoff wird bevorzugt ein Stahl mit 0,10–0,5 Gew.% C, 0,3–1,8 Gew.% Si, 0,3–1,5 Gew.% Mn, 0,2–17 Gew.% Cr, 0–18 Gew.% Ni, 0,1–0,5 Gew.% Mo, 0–0,5 Gew.% V, Rest Eisen und unvermeidliche Verunreinigungen verwendet.

Die Dimensionierung von Kern und Hülle des Verbundmetallrohlings wird bevorzugt in Abhängigkeit davon vorgenommen, ob die Plattierung bloss einen Anteil des Schneckensteges bilden oder auch den zwischen den Stegen liegenden Oberflächenbereich der Schnecke umfassen soll.

Die Erfindung wird nun anhand eines Ausführungsbeispieles näher erläutert:

Zur Herstellung von Förderschnecken für eine Kunststoff-Spritzgussmaschine wurde zunächst ein zylindrischer Stabstahlkern aus nichtrostendem Chromstahl (W.-Nr. 1.4006) mit einem Aussenmantel aus lederburitischem Chromstahl (W.-Nr. 1.2080) versehen, wobei die Dimension beider Teile so gewählt war, dass sich nach Bearbeitung der einander zugeordneten Oberflächen eine satte Passung ergab. Der Verbundkörper (Aussenmass: 134 mm; Wandstärke der Hülle: 17 mm; Länge ca. 1000 mm) wurde nun an seinen beiden Enden im Fugenbereich zur sicheren Abhaltung des Eindringens von Luft verschweisst und sodann bei einer Schmiedetemperatur von 1150 °C auf einer langschmiedemaschine in mehreren Stichen unter Ausbildung einer metallischen Bindung geschmiedet, wobei sich auf Grund des dabei erreichten Verformungsgrades von 4,25 ein Aussendurchmesser von 65 mm und ein Kerndurchmesser von 48 mm ergab. Nach dem Weichglühen wurde aus dem geschmiedeten Verbundmetallrohling durch spanabhebende Bearbeitung für zwei Förderschnecken der Abmessung 60 × 300 mm das Schneckenprofil herausgeformt. Die Höhe des Schneckensteges war unterschiedlich; sie betrug bei der einen Variante 4 mm, wobei sich eine Vollplattierung mit dem Plattierungswerkstoff ergab, d.h. auch der zwischen den Stegwindungen befindliche Schneckengrund bestand aus diesem Werkstoff. Im Kern wurde noch eine zentral angeordnete Kühlmittelbohrung von 18 mm Durchmesser vorgenommen, woraus sich auch dabei die Wahl des rostfreien Chromstahles als Kernwerkstoff erklärt. Bei der anderen Variante war die Steigung der Stegwindungen mit 50 mm gleich; die Höhe des Schneckensteges betrug aber bei dieser Ausführung 9,5 mm, sodass nur eine sogenannte Stegplattierung gebildet war und der Fussteil der Stegwindungen sowie der Schneckengrund aus dem Kernwerkstoff bestanden. Die Wärmebehandlung beider Förderschnecken wurde durch Abschreckung von 960 °C in einem Salzbad von 230 °C vorgenommen, wobei sich beim Plattierungswerkstoff eine Ansprunghärte von 64–65 $HR_c$ und beim Kernwerkstoff eine solche von 41,5–42 $HR_c$ ergab. Das Anlassen nach dem Luftabkühlen der Schnecken auf Raumtemperatur erfolgte ebenfalls in einem Salzband von 230 °C und ergab schliesslich die folgenden Endwerte:

Plattierung: 60–61 $HR_c$, Kern: 40,5–41 $HR_c$.

Die durch Fertigbearbeitung auf das Endmass fertiggestellten Förderschnecken erbrachten im praktischen Betrieb hervorragende Ergebnisse.

Für die Wahl der Werkstoffkombinationen aus Plattierungs- und Kernwerkstoff ergibt sich je nach den Einsatzbedingungen der Förderschnecken und der Massgabe, dass die Wärmebehandlung insbesondere auf die Erzielung der gewünschen Härte des Plattierungswerkstoffes abgestellt wird, zugleich aber auch für den Kernwerkstoff das gewünschte Ausmass an Härte und Zähigkeit sicherstellen soll, eine Vielzahl von Möglichkeiten, wobei die vorgeschlagene neue Technologie es erlaubt, jeweils ein Optimum zur Erreichung hervorragender Standzeiten bei einem vergleichsweise geringen Herstellungsaufwand zu finden.

## Patentansprüche

1. Verfahren zur Herstellung von Förderschnecken, insbesondere solchen für Kunststoffverarbeitungsmaschinen, mit einem zähfesten Stahlkern und einer hochverschleissfesten Plattierung, dadurch gekennzeichnet, dass zunächst ein Verbundmetallrohling durch Schmieden oder Warmwalzen eines mit einer satt anliegenden Hülle aus dem Plattierungswerkstoff versehenen stabförmigen Stahlkerns unter Ausbildung einer metallischen Bindung zwischen Kern und Hülle unter Verminderung des Hüllendurchmessers um zumindest 20% hergestellt und nach Weichglühen des Rohlings das Schneckenprofil herausgeformt wird und dass sodann eine aus Härten und Anlassen bestehende Wärmebehandlung zur Härteeinstellung des Plattierungswerkstoffes sowie des Kernwerkstoffes vorgenommen und schliesslich die Fertigbearbeitung auf das Endmass durchgeführt wird.

2. Verfahren nach Anspruch 1, dadurch gekennzeichnet, dass als Plattierungswerkstoff ein Werkzeugstahl mit 0,6–2,2 Gew.% C, 0,1–1,5 Gew.% Si, 0,1–1,5 Gew.% Mn, 4,8–13 Gew.% Cr, 0–1,5 Gew.% Mo, 0–1,5 Gew.% V, 0–1,5 Gew.% W, Rest Eisen und unvermeidliche Verunreinigungen verwendet wird.

3. Verfahren nach Anspruch 1, dadurch gekennzeichnet, dass als Plattierungswerkstoff ein Chromstahl mit 0,40–1,10 Gew.% C, 0,1–0,6 Gew.% Si, 0,1–0,6 Gew.% Mn, 12–18 Gew.% Cr, 0,1–1,5 Gew.% Mo, 0,1–1,6 Gew.% V, 0,1–1,6 Gew.% Co, Rest Eisen und unvermeidliche Verunreinigungen verwendet wird.

4. Verfahren nach Anspruch 1, dadurch gekennzeichnet, dass als Plattierungswerkstoff ein Schnellarbeitsstahl mit 0,6–1,5 Gew.% C, 0,1–1,5 Gew.% Si, 0,1–0,8 Gew.% Mn, 3,8–4,8 Gew.% Cr, 1,5–10 Gew.% Mo, 1,5–4,5 Gew.% V, 1,5–18 Gew.% W, 1,5–10 Gew.% Co, Rest Eisen und unvermeidliche Verunreinigungen verwendet wird.

5. Verfahren nach einem der Ansprüche 1 bis 4, dadurch gekennzeichnet, dass als Kernwerkstoff ein Stahl mit 0,10–0,5 Gew.% C, 0,3–1,8 Gew.% Si, 0,3–1,5 Gew.% Mn, 0,2–17 Gew.% Cr, 0–18 Gew.% Ni, 0,1–0,5 Gew.% Mo, 0–0,5 Gew.% V, Rest Eisen und unvermeidliche Verunreinigungen verwendet wird.

6. Verfahren nach einem der Ansprüche 1 bis 5, dadurch gekennzeichnet, dass die Dimensionierung von Kern und Hülle des Verbundmetallrohlings in Abhängigkeit davon vorgenommen wird, ob die Plattierung bloss einen Anteil des Schnekkensteges bilden oder auch den zwischen den Stegen liegenden Oberflächenbereich der Schnecke umfassen soll.

## Claims

1. A method of manufacturing conveying screws, in particular the kind used for plastics-processing machines, having a tough steel core and a highly wear-resistant plating, characterised in that first of all a composite metal blank is manufactured by forging or hot-rolling a rod-shaped steel core, provided with a snugly fitting casing made of the plating material so as to form a metallic bond between the core and the casing, whereby the casing diameter is reduced by at least 20%, and after annealing of the blank the screw profile is formed, and in that then a heat-treatment comprising harding and tempering is carried out to adjust the hardness of the plating material and the core material, and finally machining to the final size is carried out.

2. A method according to claim 1, characterised in that, as a plating material, a tool steel is used consisting of 0.6–2.2 wt.% C, 0,1–1.5 wt.% Si, 0.1–1.5 wt.% Mn, 4.8–13 wt.% Cr, 0–1.5 wt.% Mo, 0–1.5 wt.% V, 0–1.5 wt.% W, the remainder iron and unavoidable impurities.

3. A method according to claim 1, characterised in that, as a plating material, a chrome steel is used consisting of 0.40–1.10 wt.% C, 0.1–0.6 wt.% Si, 0.1–0.6 wt.% Mn, 12–18 wt.% Cr, 0.1–1.5 wt.% Mo, 0.1–1.6 wt.% V, 0.1–1.6 wt.% Co, the remainder iron and unavoidable impurities.

4. A method according to claim 1, characterised in that, as a plating material, a high speed steel is used consisting of 0.6–1.5 wt.% C, 0.1–1.5 wt.% Si, 0.1–0.8 wt.% Mn, 3.8–4.8 wt.% Cr, 1.5–10 wt.% Mo, 1.5–4.5 wt.% V, 1.5–18 wt.% W, 1.5–10 wt.% Co, the remainder iron and unavoidable impurities.

5. A method according to one of claims 1 to 4, characterised in that, as a core material, a steel is used consisting of 0.10–0.5 wt.% C, 0.3–1.8 wt.% Si, 0.3–1.5 wt.% Mn, 0.2–17 wt.% Cr, 0–18 wt.% Ni, 9.1–0.5 wt.% Mo, 0–0.5 wt.% V, the remainder iron and unavoidable impurities.

6. A method according to one of claims 1 to 5, characterised in that the dimensioning of the core and the casing of the joint metal blank is carried out depending on whether the plating is to form only a part of the screw web or whether it is also to include the surface area of the screw between the webs.

**Revendications**

1. Procédé pour fabriquer des vis de transport, notamment des vis de transport pour des machines de traitement des matières plastiques, comportant un noyau en acier dur et un placage très résistant à l'usure, caractérisé en ce qu'on fabrique tout d'abord une ébauche en un métal composite par forgeage ou laminage à chaud d'un noyau d'acier en forme de barre, sur lequel est appliqué d'une manière ajustée une enveloppe formée d'un matériau de placage, moyennant la formation d'une liaison métallique entre le noyau et l'enveloppe avec réduction, d'au moins 20%, du diamètre de cette enveloppe et, après recuit, on réalise par formage le profil de la vis et qu'on exécute ensuite un traitement thermique comprenant une trempe et un revenu, pour régler la dureté du matériau de placage ainsi que du matériau du noyau et qu'on met en œuvre enfin le façonnage définitif fournissant les cotes finales.

2. Procédé selon la revendication 1, caractérisé en ce qu'on utilise, comme matériau de placage, un acier à outils contenant 0,6–2,2% en poids de C, 1,1–1,5% en poids de Si, 0,1–1,5% en poids de Mn, 4,8–13% en poids de Cr, 0–1,5% en poids de Mo, 0–1,5% en poids de V, 0–1,5% en poids de W, le reste étant formé par du fer et des impuretés inévitables.

3. Procédé selon la revendication 1, caractérisé en ce qu'on utilise, comme matériau de placage, un acier au chrome contenant 0,40–1,10% en poids de C, 0,1–0,6% en poids de Si, 0,1–0,6% en poids de Mn, 12–18% en poids de Cr, 0,1–1,5% en poids de Mo, 0,1–1,6% en poids de V, 0,1–1,6% en poids de Co, le reste étant formé par du fer et des impuretés inévitables.

4. Procédé selon la revendication 1, caractérisé en ce qu'on utilise, comme matériau de placage, un acier rapide contenant 0,6–1,5% en poids de C, 0,1–1,5% en poids de Si, 0,1–0,8% en poids de Mn, 0,8–4,8% en poids de Cr, 1,5–10% en poids de Mo, 1,5–4,5% en poids de V, 1,5–18% en poids de W, 1,5–10% en poids de Co, le reste étant formé par du fer et des impuretés inévitables.

5. Procédé selon l'une des revendications 1 à 4, caractérisé en ce qu'on utilise, comme matériau du noyau, un acier contenant 0,10–0,5% en poids de C, 0,3–1,8% en poids de Si, 0,3–1,5% en poids de Mn, 0,2–17% en poids de Cr, 0–18% en poids de Ni, 0,1–0,5% en poids de Mo, 0–0,5% en poids de V, le reste étant formé par du fer et des impuretés inévitables.

6. Procédé selon l'une des revendications 1 à 5, caractérisé en ce que le dimensionnement du noyau et de l'enveloppe de l'ébauche formée d'un métal composite est choisi en fonction du fait que le placage doit former simplement une partie du sommet du filet de la vis ou doit entourer également la zone superficielle de la vis située entre les sommets des filets de la vis.